Europäisches Patentamt

European Patent Office

Office européen des brevets

(19)

(11) Veröffentlichungsnummer: **0 125 483 B1**

(12) # EUROPÄISCHE PATENTSCHRIFT

(45) Veröffentlichungstag der Patentschrift: **11.12.91**

(21) Anmeldenummer: **84103942.3**

(22) Anmeldetag: **09.04.84**

(51) Int. Cl.⁵: **C08L 77/00, C08L 9/00, C08L 51/04, C08J 3/20**

(54) **Schlagzähe thermoplastische Formmassen und Verfahren zu ihrer Herstellung.**

(30) Priorität: **16.04.83 DE 3313919**

(43) Veröffentlichungstag der Anmeldung:
**21.11.84 Patentblatt 84/47**

(45) Bekanntmachung des Hinweises auf die
Patenterteilung:
**11.12.91 Patentblatt 91/50**

(84) Benannte Vertragsstaaten:
**CH DE FR GB IT LI NL**

(56) Entgegenhaltungen:
**EP-A- 83 446**
**EP-A- 0 001 245**
**US-A- 4 174 358**

(73) Patentinhaber: **BASF Aktiengesellschaft**
**Carl-Bosch-Strasse 38**
**W-6700 Ludwigshafen(DE)**

(72) Erfinder: **Mc Kee, Graham Edmund, Dr.**
**Kastanienweg 8**
**W-6940 Weinheim(DE)**
Erfinder: **Ohlig, Hilmar**
**Friedenstrasse 111**
**W-6750 Kaiserslautern(DE)**
Erfinder: **Reimann, Horst, Dr.**
**Adelheidstrasse 26**
**W-6520 Worms 1(DE)**
Erfinder: **Schlemmer, Lothar**
**Duisbergstrasse 1 a**
**W-6701 Maxdorf(DE)**
Erfinder: **Theysohn, Rainer, Dr.**
**Am Bruch 38**
**W-6710 Frankenthal(DE)**
Erfinder: **Dorst, Hans Georg, Dr.**
**Berliner Strasse 23**
**W-6705 Deidesheim(DE)**
Erfinder: **Zahradnik, Franz, Dr.**
**Schwedlerstrasse 120**
**W-6700 Ludwigshafen(DE)**

EP 0 125 483 B1

EP 0 125 483 B1

## Beschreibung

Es ist bekannt, die Schlagzähigkeit von thermoplastischen Polyamiden dadurch zu verbessern, daß man kautschukelastische Polymerisate zumischt. Letztere sollen in möglichst feiner Verteilung im Polykondensat vorliegen.

Das Dispergieren eines Kautschuks in einem Polykondensat erfordert sehr hohe Scherkräfte und führt nur dann zu einem befriedigenden Produkt, wenn Polykondensat und Kautschuk in Form von Pulver eingesetzt werden können.

Kautschuk läßt sich jedoch bekanntlich nicht zu einem feinteiligen Pulver verarbeiten, da die Kautschukteilchen leicht zusammenfließen.

Es ist bekannt, kautschukelastische Polymerisate durch Emulsionspolymerisation herzustellen und in Dispersion die einzelnen Teilchen mit einer harten Pfropfhülle zu versehen. Man erhält dabei nach dem Ausfällen und Trocknen oder durch Sprühtrocknen letztlich ein pulverförmiges Polymerisat, das als Schlagzähigmodifier für Polyamide geeignet ist. Dieses Polymerisat enthält jedoch durch die harte Pfropfhülle Anteile, die als Schlagzähmodifier unwirksam sind und die mechanischen Eigenschaften ungünstig beeinflussen.

Aus der EP-A 1245 ist bekannt, daß Pfropfprodukte hergestellt aus einem vernetzten Butadienpolymerisat durch Aufpfropfen von Estern der (Meth)acrylsäure sowie ggf. (Meth)acrylamid und (Meth)acrylnitril die Schlagzähigkeit von Polyamiden erhöhen. Bei Verwendung von Pfropfpolymerisaten, die keine harte Schale besitzen, werden jedoch völlig unbefriedigende Ergebnisse erzielt, da diese Polymerisate in der Formmasse in agglomerierter Form vorliegen.

Aus der US-PS 4 174 358 sind Polyamidformmassen bekannt, die ein Polymeres mit einem Zugmodul zwischen 1 und 20.000 p.s.i. enthalten und die durch Vermischen der trocknen Komponenten in einem Extruder hergestellt werden. Durch Emulsionspolymerisation hergestellte kautschukelastische Polymerisate, die keine harte Schale aufweisen, werden dabei nicht verwendet. Nach dem Verfahren dieser Patentschrift können auch keine Formmassen mit derartigen Polymerisaten hergestellt werden, die eine im wesentlichen durch die Emulsionspolymerisation vorgegebenen Teilchengrößenverteilung mit einer Teilchengröße unter 2 $\mu$m erhalten werden, wie das Vergleichsbeispiel 10 der vorliegenden Patentanmeldung zeigt.

In der nachveröffentlichten älteren EP-Anmeldung 83 446 werden schlagzähe Formmassen aus Polyamid und einem Emulsionspfropfkautschuk, der eine äußere harte Hülle aufweist, vorgeschlagen. Diese äußere Hülle des Emulsionspfropfkautschukes wird durch Polymerisation von Monomeren wie 2-Methylstyrol, STyrol, Acrylnitril und Methylmethacrylat erzeugt.

Der vorliegenden Erfindung liegt die Aufgabe zugrunde, neue schlagzähe thermoplastische Formmassen auf Basis von thermoplastischen Polyamiden und einem kautschukelastischen Polymerisat zu entwikkeln, bei denen die Nachteile, die durch die harte Pfropfhülle der Polymerisatteilchen verursacht werden, vermieden werden und gleichzeitig die Polymerisatteilchen in einer engen Größenverteilung vorliegen.

Überraschenderweise wurde nun gefunden, daß man durch Emulsionspolymerisation hergestellte kautschukelastische Polymerisate ohne harte Pfropfhülle unter weitgehendem Erhalt der Teilchengröße der Dispersion in Polykondensate einarbeiten kann, wenn man, beispielsweise in einem Extruder oder einer anderen üblichen Mischvorrichtung, eine Schmelze des Polykondensats mit einer wäßrigen Dispersion des kautschukelastischen Polymerisats innig vermischt und gleichzeitig das dabei verdampfende Wasser entfernt. Überraschenderweise fließen bei diesem Verfahren die Kautschukteilchen nicht zu großen Aggregaten zusammen, wie dies bei Vermischen unter der Schmelztemperatur des Polykondensats der Fall ist. Die Schlagzähigkeit der neuen thermoplastischen Formmassen liegt überraschenderweise wesentlich höher als die vergleichbarer Produkte des Standes der Technik.

Überraschenderweise bleibt die Teilchengrößenverteilung der Dispersion weitgehend erhalten, so daß das Polymerisat mit enger Teilchengrößenverteilung in der Komponente (A) dispergiert vorliegt.

Gegenstand der vorliegenden Erfindung sind somit schlagzähe thermoplastische Formmassen, enthaltend

(A) 60 bis 95 Gewichtsteile mindestens eines kristallinen, thermoplastischen Polyamids,

(B) 5 bis 40 Gewichtsteile mindestens eines durch Emulsionspolymerisation hergestellten, in einer im wesentlichen durch die Emulsionspolymerisation vorgegebenen Teilchengrößenverteilung und einer Teilchengröße unter 2$\mu$ in der Komponente A dispergierten und darin weitgehend unlöslichen kautschukelastischen Polymerisats ohne harte äußere Schale, wobei die Komponente (B) zumindest teilweise vernetzt ist und eine Gasübergangstemperatur unterhalb -20$^\circ$ C besitzt, und die Summe von (A) und (B) 100 Gewichtsteile beträgt,

(C) gegebenenfalls bis zu 100 Gewichtsteile Glasfasern oder andere verstärkend wirkende Füllstoffe, und

(D) gegebenenfalls übliche Hilfsstoffe in wirksamen Mengen, und erhältlich durch inniges Vermischen

2

einer Schmelze der Komponente (A) mit einer wäßrigen Dispersion der Komponente (B) unter gleichzeitiger Entfernung des dabei verdampften Wassers.

Gegenstand der vorliegenden Erfindung ist ferner ein Verfahren zur Herstellung dieser schlagzähen thermoplastischen Formmassen, das dadurch gekennzeichnet ist, daß man eine Schmelze der Komponente (A) mit einer wäßrigen Dispersion der Komponente (B) innig vermischt und gleichzeitig das dabei verdampfende Wasser entfernt.

Als Komponente (A) der neuen schlagzähen thermoplastischen Formmassen werden kristalline thermoplastische Polyamide verwendet. Diese Komponenten sollen kristallin sein, d.h. mindestens 20 % kristalline Anteile enthalten. Sie sollen thermoplastisch sein. Ihr Schmelzbereich liegt im allgemeinen oberhalb von 60°C.

Die Polyamide gemäß der Erfindung sind an sich bekannt und umfassen die Harze mit Molekulargewichten von mindestens 5000, die gewöhnlich als Nylon bezeichnet werden. Solche Polyamide sind in den US-PSen 2 071 250, 2 071 251, 2 130 523, 2 130 948, 2 241 322, 2 312 966, 2 512 606 und 3 393 210 beschrieben. Das Polyamidharz kann durch Kondensation äquimolekularer Mengen einer gesättigten Dicarbonsäure mit 4 bis 12 Kohlenstoffatomen, mit einem Diamin, welches 4 bis 14 Kohlenstoffatome aufweist, hergestellt werden. Um einen Überschuß an endständigen Amingruppen über die entständigen Carboxylgruppen in dem Polyamid zu erzielen, kann man das Diamin im Überschuß anwenden.

Beispiele für Polyamide sind Polyhexamethylenadipinsäureamid (Nylon 66), Polyhexamethylenazelainsäureamid (Nylon 69), Polyhexamethylensebacinsäureamid (Nylon 610), Polyhexamethylendodecandisäureamid (Nylon 612), die durch Ringöffnung von Lactamen erhaltenen Polyamide, wie Polycaprolactam, Polylaurinsäurelactam, ferner Poly-11-aminoundecansäure und Bis-(p-aminocyclohexyl)-methandodecandisäureamid. Es ist auch möglich, gemäß der Erfindung Polyamide zu verwenden, die durch Copolymerisation zweier der oben genannten Polieren oder durch Terpolymerisation der oben genannten Polymeren oder ihrer Komponenten hergestellt worden sind, z.B. das Copolymere aus Adipinsäure, Isophthalsäure und Hexamethylendiamin. Vorzugsweise sind die Polyamide linear und haben Schmelzpunkte von mehr als 200°C.

Bevorzugte Polyamide sind Polyhexamethylenadipinsäureamid und Polycaprolactam. Die Polyamide weisen im allgemeinen eine relative Viskosität von 2 bis 5 auf, bestimmt an einer 1%igen Lösung in $H_2SO_4$ bei 23°C. Polyamide mit einer relativen Viskosität von 2,5 bis 4,0 werden bevorzugt verwendet.

Als Komponente B werden kautschukelastische Polymerisate verwendet, die durch Emulsionspolymerisation hergestellt werden und die keine harte äußere Schale aufweisen. Die Polymerisate sind weitgehend unlöslich in der Komponente (A). Geeignete Polymerisate besitzen eine Glas-Übergangstemperatur unterhalb von -20°C.

Sie sind zumindest teilweise vernetzt, d.h. sie besitzen mehr als 30 % bei 23°C unlösliche Anteile. Vorzugsweise werden Polymerisate verwendet, die zumindest an der Oberfläche der Teilchen Molekülgruppen aufweisen, die eine gewisse Haftung an den Molekülen der Komponente (A) bewirken.

Derartige kautschukartige Polymerisate sind an sich bekannt. Sie werden hergestellt durch Polymerisation einer Emulsion von geeigneten Monomeren, wie Butadien, Isopren, höheren Alkylester der Acrylsäure oder Methacrylsäure, gegebenenfalls unter Mitverwendung von bis zu 30 Gew.% an Monomeren, die bei der Homopolymerisation harte Polymerisate liefern, wie Styrol, Acrylnitril, Methylacrylat, Methylmethacrylat, Vinylmethylether.

Diese Polymerisation wird in bekannter Weise unter Verwendung üblicher Emulgatoren und Katalysatoren durchgeführt.

Die Technik der Emulsionspolymerisation ist ausführlich beschrieben in Houben-Weyl, Methoden der organischen Chemie Band XII. 1 (1961), Seite 133 bis 406.

Die Polymerisatdispersionen, wie sie gemäß der Erfindung eingesetzt werden enthalten üblicherweise etwa 30 bis 90 Gew.%, vorzugsweise 40 bis 65 Gew.% Wasser. Die Polymerisatteilchen besitzen eine enge Teilchengrößenverteilung; die Teilchengröße selbst liegt im allgemeinen zwischen 0,05 und 2µ, vorzugsweise zwischen 0,08 und 0,7µ. Es ist vorteilhaft, die Polymerisatteilchen selbst inhomogen aufzubauen, indem man beispielsweise Monomere, die eine Haftung mit der Komponente (A) bewirken, erst gegen Ende der Polymerisation zusetzt. Dadurch wird bewirkt, daß zumindest die Oberfläche der Polymerisatteilchen Molekülgruppen aufweist, die eine Haftung an den Molekülen der Komponente (A) bewirken.

Üblicherweise werden als kautschukelastische Polymerisate verwendet Polybutadien, Butadien-Styrol-Copolymere mit einem Styrolgehalt von weniger als 30 Gew.%, Butadien-(Meth)acrylester-Copolymere sowie (Meth)acrylesterhomopolymere, mit gegebenenfalls geringen Mengen an vernetzend wirkenden Monomeren. Besonders bevorzugt sind kautschukelastische Poly(meth)acrylate, wie Poly-n-butylacrylat, Polyhexylacrylat, Poly-2-ethylhexylacrylat, die gegebenenfalls geringe Menge, etwa 0,1 bis 6 Gew.% eines Monomeren mit Carbonsäuregruppen, Carbonsäure liefernden Gruppen oder Carbonsäureamid-Gruppen einpolymerisiert enthalten, wie (Meth)acrylsäure, t-Butylacrylat, Fumarsäure, Acrylamid oder Methacrylamid. Ein Anteil von 1 bis 10 Gewichtsprozent dieser Monomeren zumindest in der Oberflächenhülle der Polymerisatteilchen bewirkt eine verbesserte Haftung an der Polyamid-Matrix.

Als Vernetzer wirkende Monomere sind beispielsweise Divinylbenzol, Dialkylphthalat, Tricyclodecenylacrylat, Trialkylcyanurat und Triallylisocyanurat geeignet.

Als im Sinne der vorliegenden Erfindung vorteilhaft geeignete Polymerisatdispersionen für die Komponente B können gelten:

Polymerisate, die aufgebaut sind aus Estern der (Meth)acrylsäure mit bis zu 15 C-Atomen, gegebenenfalls bis zu 5 Gew.% radikalisch vernetzbaren Comonomeren mit 2 oder mehr Doppelbindungen pro Molekül, und bis zu 5 Gew.% einer radikalisch copolymerisierbaren Säure oder eines Säureanhydrids. Der Ester ist vorzugsweise n-Butylacrylat oder Ethylhexylacrylat, die Säure ist vorzugsweise Acryl- oder Methacrylsäure.

Anstelle der freien Säure und des Anhydrids kann auch vorteilhaft t-Butylacrylat eingesetzt werden.

Anstelle der freien Säure kann auch ein Säureamid einer ungesättigten Carbonsäure verwendet werden. Vorteilhaft ist Acrylamid.

Der Ester der (Meth)acrylsäure mit bis zu 15 C-Atomen kann teilweise durch Butadien oder Isopren ersetzt werden. Wenn mit t-Butylacrylat als haftungsfördernden Monomeren modifiziert wird, wird vorzugsweise nur ein Teil des Esters durch Butadien oder Isopren ersetzt. Bei Verwendung von freien Säuren, Säureamiden oder Säureanhydriden als haftungsfördernden Comonomeren kann der Ester der (Meth)-acrylsäure mit bis zu 15 C-Atomen auch ganz oder überwiegend durch Butadien oder Isopren ersetzt werden.

Die Polymerisatteilchen in der Dispersion sind zumindest teilweise vernetzt. So kann z.B. der Kern des Polymerisatteilchens stark vernetzt sein, während die äußere Schale, die vorzugsweise die haftungsfördernden Comonomeren einpolymerisiert enthält, gegebenenfalls auch unvernetzt sein kann.

Weiter ist es vorteilhaft, Polymerisatteilchen zu verwenden mit einem Kern aus einpolymerisierten Butadien- oder Isoprenpolymeren und einer nicht harten Schale aus einem (Meth)acrylatpolymeren. Der Vorteil eines solchen Systems ist, daß die Polyacrylatschale den Polybutadienkern vor oxidativem Abbau schützen kann.

Wenn nötig kann der Teilchenaufbau auch aus mehreren nicht harten Schalen bestehen. Kern und Schale der Polymerisatteilchen bzw. die verschiedenen Schalen können miteinander chemisch verbunden werden (Pfropfung) oder nur durch Inter-Penetrating-Netzwerke miteinander gekoppelt sein.

Die Formmassen können als Komponente (C) gegebenenfalls bis zu 100 Gew.% im allgemeinen 25 bis 100 Gew.%, insbesondere 30 bis 80 Gew.% Glasfasern oder andere verstärkend wirkende Füllstoffe wie Asbest, Wollastonit, Glimmer, Talkum, Kreide und Glaskugeln enthalten.

Die erfindungsgemäßen Mischungen können als weitere Komponente (D) alle Zusatz- und/oder Hilfsstoffe enthalten, wie sie für Polyamide üblich und gebräuchlich sind. Als solche Zusatz- und/oder Hilfsstoffe seien beispielsweise genannt: weitere verträgliche Kunststoffe, Farbstoffe oder Pigmente, Antistatika, Antioxidantien, Flammschutzmittel und Schmiermittel. Die Zusatz- und Hilfsstoffe werden in üblichen und wirksamen Mengen, vorzugsweise in Mengen von 0,1 bis zu insgesamt etwa 30 Gew.%, bezogen auf die Summe der Komponente (A) und (B), eingesetzt.

Die Herstellung der Formmassen gemäß der Erfindung erfolgt durch Vermischen der Komponenten in einer an sich bekannten Mischvorrichtung. Dabei wird zunächst das Polyamid plastifiziert. Die Schmelze wird dann mit der Kautschukdispersion innig vermischt. Dabei verdampft spontan das Wasser und die Kautschukteilchen verteilen sich gleichmäßig in der Schmelze. Dieser Vorgang läuft so schnell ab, daß die Kautschukteilchen keine Gelegenheit haben zusammenzufließen.

Die Ausgangsstoffe werden zweckmäßig in selbstreinigenden zweiwelligen Schneckenmaschinen mit im gleichen Sinne rotierenden Schneckenwellen vermischt. Sie werden an getrennten Stellen dem Extruder zugeführt, wobei üblicherweise der Thermoplast am Einzug der Schneckenmaschine zugeführt und in einer ersten Schneckenzone mit tief eingeschnittenen Gewindeprofilen plastifiziert und über eine Knetzone in eine zweite Schneckenzone gefördert wird. Die Kautschukdispersion wird mittels einer Dosierpumpe, die einen für die Förderung des Kautschuks erforderlichen Flüssigkeitsvordruck bewirkt, in die zweite Schneckenzone zudosiert. Kautschuk und Thermoplast werden in mehreren folgenden Abschnitten mit unterschiedlicher Gangzahl und Gewindesteigung miteinander innig vermischt. Das dabei spontan verdampfende Wasser wird als Dampf durch Entgasungsstutzen entfernt, die zweckmäßig jeweils im Anschluß an eine Knetzone angebracht sind. Die Wasserentfernung kann gegebenenfalls auch über ein Druckkontrollventil erfolgen. Die Masse wird anschließend ausgepreßt, gekühlt und zerkleinert.

Die Verarbeitungstemperatur liegt im üblichen Verarbeitungsbereich der betreffenden Polyamide im allgemeinen zwischen 220 und 300°C. Vielfach ist es vorteilhaft, möglichst niedrige Temperaturen zu

4

wählen, um eine thermische Schädigung der Komponenten zu verhindern.

Die erhaltenen Produkte besitzen wertvolle mechanische Eigenschaften und zeichnen sich durch besonders hohe Schlagzähigkeit aus. Sie sind daher geeignet für die Herstellung von technischen Formteilen aller Art.

Die Ermittlung der Glasübergangstemperatur des Kautschuks erfolgte nach der DSC-Methode (K.M. Illers, Makromol. Chemie 127 (1969) S. 1 ff).

Beispiele

In den Beispielen wurden die folgenden Emulsionspolymerisate verwendet:

E 1

Kautschukelastisches Polymerisat aus
98,39 Gewichtsteilen n-Butylacrylat
1,22 Gewichtsteilen Tricyclodecenylacrylat
0,39 Gewichtsteile Methacrylsäure,
hergestellt durch Emulsionspolymerisation in 66 Gewichtsteilen Wasser unter Verwendung von 1,0 Gewichtsteilen Natriumsalz einer $C_{12}$-$C_{18}$-Paraffinsulfonsäure als Emulgator und 0,35 Gewichtsteilen Kaliumpersulfat als Katalysator bei 65 °C. Tricyclodecenylacrylat wurde mit einem Teil des n-Butylacrylat gemischt und in den ersten 60 % des n-Butylacrylatzulaufs kontinuierlich zudosiert. Die Methacrylsäure wurde in den letzten 40 % des n-Butylacrylatzulaufs kontinuierlich zudosiert.
Teilchengröße 0,4μm monodispers
Feststoffgehalt 60 %
Glasübergangstemperatur ~-40 °C

E 2

Kautschukelastisches Polymerisat aus
97,61 Gewichtsteilen n-Butylacrylat
1,22 Gewichtsteilen Tricyclodecenylacrylat
1,17 Gewichtsteilen t-Butylacrylat,
hergestellt wie E 1 mit t-Butylacrylat statt Methacrylsäure.
Feststoffgehalt 60 %
Teilchengröße 0,4μm monodispers
Glasübergangstemperatur -40 °C

E 3

Kautschukelastisches Polymerisat aus
97,6 Gewichtsteilen n-Butylacrylat
1,2 Gewichtsteilen Tricyclodecenylacrylat
1,2 Gewichtsteilen Acrylamid
hergestellt wie E 1 mit Acrylamid anstelle von Methacrylsäure.
Feststoffgehalt 45 %
Teilchengröße 0,4μm monodispers
Glasübergangstemperatur -40 °C.

E 4

Kautschukelastisches Polymerisat aus
67,6 Gewichtsteilen n-Butylacrylat
0,4 Gewichtsteile Methacrylsäure
32,0 Gewichtsteilen Butadien
hergestellt durch Emulsionspolymerisation, wobei als erste Stufe 80 Gewichtsteile einer Mischung aus Butylacrylat und Butadien (60 : 40 Gewichtsverhältnis) plus 0,45 Teile t-Dodecylmerkaptan als Regler copolymerisiert wurden und als zweite Stufe (äußere Schale) 20 Gewichtsteile einer Mischung aus n-Butylacrylat und Methacrylsäure (98 : 2 Gewichtsverhältnis) aufpolymerisiert wurden.

Feststoffgehalt 51 %
Teilchengröße 0,13μm monodispers
Glasübergangstemperatur der äußeren Schale ~-40° C
Glasübergangstemperatur des inneren Kerns ~-60° C.

E 5

Kautschukelastisches Polymerisat aus
67 Gewichtsteile n-Butylacrylat
1 Gewichtsteil t-Butylacrylat
32 Gewichtsteile Butadien
hergestellt durch Emulsionspolymerisation, wobei als erste Stufe 80 Gewichtsteile einer Mischung aus n-Butylacrylat und Butadien plus 0,45 Teilen t-Dodecylmerkaptan als Regler copolymerisiert wurde und als zweite Stufe 20 Gewichtsteile einer Mischung aus n-Butylacrylat und t-Butylacrylat (95 : 5) aufpolymerisiert wurden.
Feststoffgehalt 53 %
Teilchengröße 0,15μm monodispers
Glasübergangstemperatur der äußeren Schale ~-40° C
Glasübergangstemperatur der inneren Schale ~-60° C.

E 6

Kautschukelastisches Polymerisat aus
9,4 Gewichtsprozent n-Butylacrylat
0,2 Gewichtsprozent Methacrylsäure
3,8 Gewichtsprozent Ethylacrylat
0,2 Gewichtsprozent Methacrylamid
86,4 Gewichtsprozent Butadien
hergestellt durch Emulsionspolymerisation, wobei als erste Stufe 90 Teile Butadien in Gegenwart von 0,9 Teile t-Dodecylmerkaptan als Regeler polymerisiert wurden (innerer Kern) und als zweite Stufe (äußere Schale) 10 Gewichtsteile einer Mischung aus n-Butylacrylat und Methacrylsäure (98 : 2 Gewichtsverhältnis) aufpolymerisiert wurden. Zwischen der ersten und zweiten Stufe erfolgte eine gezielte Agglomeration der ca. 0,1μm großen Teilchen durch Zugabe von 4 Gew.% (fest bezogen auf fest) einer Ethylacrylat-Methacrylamid-Copolymerdispersion.
Feststoffgehalt 50 %.
Teilchengröße 0,1 bis 0,7μm
Glasübergangstemperatur der äußeren Schale ~-40° C
Glasübergangstemperatur des inneren Kerns ~-80° C.

E 7

Dieses Kautschukelastische Polymerisat wurde hergestellt wie E 6 aber statt Methacrylsäure wurde t-Butylacrylat verwendet und zwischen den beiden Stufen wurde nicht agglomeriert.
9,8 Gewichtsteile n-Butylacrylat
0,2 Gewichtsteile t-Butylacrylat
90,0 Gewichtsteile Butadien.
Feststoffgehalt = 52 %
Teilchengröße = 0,15μm monodispers
Glasübergangstemperatur der äußeren Schale ~-40° C
Glasübergangstemperatur der inneren Schale ~-80° C.

E 8

E 8 wurde hergestellt wie E 1 aber statt n-Butylacrylat wurde Ethylhexylacrylat verwendet.
Feststoffgehalt 50 %
Teilchengröße 0,3μm monodispers
Glasübergangstemperatur ~-50° C.

Beispiele 1 bis 9

Die Herstellung der thermoplastischen Formmassen erfolgte in einem Extruder (Type ZSK 53 der Fa. Werner und Pfleiderer). Der Thermoplast wurde am Einzug der Schneckenmaschine zugeführt und in einer ersten Schneckenzone mit tief eingeschnittenen Gewindeprofilen plastifiziert und über eine Knetzone in eine zweite Schneckenzone gefördert, in der die wäßrige Suspension des Kautschukelastischen Polymerisats dosiert zugeführt wurde, wobei die Förderung der Dispersion durch den Flüssigkeitsvordruck einer Dosierpumpe bewirkt wird.

Thermoplast und Kautschuk werden in den nachfolgenden Abschnitten unterschiedlicher Gangzahl und Gewindesteigung miteinander innig vermischt, wobei im Anschluß an die Knetzone das spontan verdampfte Wasser als Dampf durch zwei Entgasungsstutzen entfernt wird und anschließend die Formmasse als Strang ausgepreßt, abgekühlt und zerkleinert wird. Die Vermischung erfolgt bei einer Drehzahl von 150 Upm und bei einem praktisch gleichbleibenden Temperaturprofil zwischen Einzug und Austrag von etwa 250°C. Bei Mischungen von 85 Gew.% Polyamid 6 (relative Viskosität 3,3, gemessen 1 %ig in konz. Schwefelsäure) mit 15 Gew.% der Polymeren E 1 bis E 8 wurden folgende Eigenschaftswerte gemessen (Tabelle I).

Als Vergleich wurden die Kautschuke aus Dispersionen E 1, E 2 und E 3 ausgefällt, getrocknet und als Festprodukt mit dem Polyamid abgemischt. Die mechanischen Eigenschaften waren deutlich schlechter. Bei dem Kautschuk aus Dispersion E 8 gelang das trockene Vermischen nicht, da der Kautschuk die Dosier- und Mischvorrichtungen verstopfte.

## Tabelle I

Polyamid-6-/Kautschuk-Mischungen (85 : 15 Gewichtsteile)

| Beispiel | Kautschuk 15 Gew.% (als Dispersion zugegeben) | Kerbschlagzähigkeit[1] $[kJ/m^2]$ 23°C | -20°C | -40°C | Teilchengröße | Teilchengrößenverteilung |
|---|---|---|---|---|---|---|
| 1 | keine | 3,5 | 2,0 | 1,3 | – | – |
| 2 | E 1 | 46 | 9 | 6 | 0,4µm | monodispers |
| 3 | E 2 | 54 | 12 | 5 | 0,4µm | monodispers |
| 4 | E 3 (20 Gew.%) | 66 | 10 | 4 | 0,4µm | monodispers |
| 5 | E 4 | 69 | 13 | 5 | 0,13µm | monodispers |
| 6 | E 5 | 64 | 11 | 7 | 0,15µm | monodispers |
| 7 | E 6 | 56 | 14 | 12 | 0,1 bis 0,7µm | im wesentlichen wie in der Dispersion |
| 8 | E 7 | 46 | 12 | 10 | 0,15µm | monodispers |
| 9 | E 8 | 35 | 6 | 3 | 0,3µm | monodispers |
| 10 Vergleich | Dispersion E 1 trocken eingemischt | 30 | 6 | 2 | 1 bis 5µm | uneinheitlich |

[1] nach DIN 53453 gemessen an bei 280°C gespritzten Normkleinstäben

Beispiele 11 bis 13

Entsprechend den Beispielen 1 bis 9 wurden Formmassen aus Polyamid-6 (relat. Viskosität 3,3 in konz. Schwefelsäure) und dem Kautschuk E 2 unter Mitverwendung von Füllstoffen hergestellt. Die Produkte und entsprechende Vergleichsprodukte sind in Tabelle II zusammengestellt.

EP 0 125 483 B1

### Tabelle II

| Beispiel | Polyamid-6 Gew.% | E 2 Gew.% | Zusatzstoff Gew.% | Bruchenergie an 2 mm Rundscheiben bei −20°C [Nm]* |
|---|---|---|---|---|
| 11 | 65 | 15 | 20 Wollastonit | 40 |
| Vergleich | 80 | 0 | 10 Wollastonit | 24 |
| 12 | 65 | 15 | 20 calcinierter Kaolin | 32 |
| Vergleich | 80 | 0 | 20 calcinierter Kaolin | 8 |
| 13 | 55 | 15 | 30 Glasfasern | 13 |
| Vergleich | 70 | 0 | 30 Glasfasern | 2 |

\* nach DIN 53 443, Blatt 1

Kalottendurchmesser 20 mm

Kalottenradius 25 mm

**Patentansprüche**

1. Schlagzähe thermoplastiche Formmassen, enthaltend

    (A) 60 bis 95 Gewichtsteile mindestens eines kristallinen, thermoplastischen Polyamids,

    (B) 5 bis 40 Gewichtsteile mindestens eines durch Emulsionspolymerisation hergestellten, in einer im wesentlichen durch die Emulsionspolymerisation vorgegebenen monodispersen Teilchengrößen verteilung mit einer Teilchengröße unter 2 μm in der Komponente A dispergierten und darin weitgehend unlöslichen kautschukelastichen Polymerisats ohne harte äußere Schale, wobei die Komponente (B) zumindest teilweise vernetzt ist und eine Glasübergangstemperatur unterhalb -20°C besitzt, und die Summe von (A) und (B) 100 Gewichtsteile beträgt,

    erhältlich durch inniges Vermischen einer Schmelze der Komponente (A) mit einer wäßrigen Dispersion der Komponente (B) unter gleichzeitiger Entfernung des dabei verdampften Wassers.

2. Thermoplastische Formmassen nach Anspruch 1, enthaltend zusätzlich

    (C) bis zu 100 Gewichtsteile Glasfasern oder andere verstärkend wirkende Füllstoffe, und

    (D) bis zu 30 Gewichtsteile übliche Hilfsstoffe in wirksamen Mengen.

3. Schlagzähe thermoplastische Formmassen nach Anspruch 1 oder 2 dadurch gekennzeichnet, daß die Komponente (B) an der Oberfläche der Teilchen Molekülgruppen aufweist, die eine Haftung an den Molekülen der Komponente (A) bewirken.

4. Schlagzähe thermoplastische Formmassen nach einem der Ansprüche 1 bis 3, enthaltend als Komponente (B) ein Polymerisat das zumindest an der Oberfläche der Teilchen Carbonsäure-, Carbonsäureester oder Carbonsäureamid-Gruppen enthält.

5. Verfahren zur Herstellung der thermoplastischen Formmassen gemäß Anspruch 1, dadurch gekennzeichnet, daß man eine Schmelze der Komponente (A) mit einer wäßrigen Dispersion der Komponente (B) innig vermischt und gleichzeitig das dabei verdampfende Wasser entfernt.

**Claims**

1. A thermoplastic molding material which has a high impact strength and contains

    (A) from 60 to 95 parts by weight of one or more crystalline thermoplastic nylons,

    (B) from 5 to 40 parts by weight of one or more elastomeric polymers which are prepared by emulsion polymerization, do not possess a hard outer shell, are dispersed in component A, in which they are substantially insoluble, in a monodisperse particle size distribution predetermined essentially by the emulsion polymerization, and have a particle size of less than 2 μm, the component (B) being partially or completely crosslinked and having a glass transition temperature of less than -20° C, and the sum of (A) and (B) being 100 parts by weight, obtainable by intimately mixing a melt of component (A) with an aqueous dispersion of component (B) with simultaneous removal of the water which vaporizes during the procedure.

2. A thermoplastic molding material as claimed in claim 1, additionally containing
   (C) up to 100 parts by weight of glass fibers or other reinforcing fillers, and
   (D) effective amounts of up to 30 parts by weight of conventional assistants.

3. A thermoplastic molding material having high impact strength as claimed in claim 1 or 2, wherein component (B) possesses, at the surface of the particles, molecular groups which promote adhesion to the molecules of component (A).

4. A thermoplastic molding material having high impact strength as claimed in any of claims 1 to 3, which contains, as component (B), a polymer which possesses, at least at the surface of the particles, carboxyl, carboxylic acid ester or carboxamide groups.

5. A process for the preparation of the thermoplastic molding material as claimed in claim 1, wherein a melt of component (A) is mixed intimately with an aqueous dispersion of component (B), and at the same time the water which vaporizes during the procedure is removed.

## Revendications

1. Masses à mouler thermoplastiques résistantes aux chocs, contenant
   (A) de 60 à 95 parties en poids d'au moins un polyamide thermoplastique cristallin,
   (B) de 5 à 40 parties en poids d'au moins un polymère ayant l'élasticité du caoutchouc, dépourvu de coquille extérieure dure, préparé par polymérisation en émulsion, dispersé dans le composant A en une répartition granulométrique monodispersée essentiellement prédéfinie par la polymérisation en émulsion, avec une grosseur de particules inférieure à 2 μm, et très peu soluble dans le composant A, le composant (B) étant au moins partiellement réticulé et ayant une température de transition vitreuse inférieure à -20° C, et la somme de (A) et (B) s'élevant à 100 parties en poids, pouvant être obtenues par mélange intime d'une masse fondue du composant (A) avec une dispersion aqueuse du composant (B), avec élimination simultanée de l'eau évaporée au cours de l'opération.

2. Masses à mouler thermoplastiques selon la revendication 1, contenant en outre
   (C) jusqu'à 100 parties en poids de fibres de verre ou d'autres matières de charge ayant un effet de renforcement, et
   (D) jusqu'à 30 parties en poids de produits auxiliaires usuels dans des quantités efficaces.

3. Masses à mouler thermoplastiques résistantes aux chocs selon la revendication 1 ou 2, caractérisées en ce que le composant B présente, à la surface des particules, des groupes de molécules qui produisent une adhérence aux molécules du composant (A).

4. Masses à mouler thermoplastiques résistantes aux chocs selon l'une quelconque des revendications 1 à 3, contenant, en tant que composant (B), un polymère qui contient, au moins à la surface des particules, des groupements acide carboxylique, des groupements ester d'acide carboxylique ou des groupements amide d'acide carboxylique.

5. Procédé de préparation de masses à mouler thermoplastiques selon la revendication 1, caractérisé en ce qu'on mélange intimement une masse fondue du composant (A) avec une dispersion aqueuse du composant (B) et on élimine en même temps l'eau évaporée au cours de l'opération.